# EUROPÄISCHE PATENTSCHRIFT

(11) **EP 3 542 974 B1**
(45) Veröffentlichungstag und Bekanntmachung des Hinweises auf die Patenterteilung: **13.05.2020**
(21) Anmeldenummer: 18162828.0
(22) Anmeldetag: 20.03.2018
(51) Int. Cl.: B25J 15/06, B25J 15/00

(54) **SAUGGREIFSYSTEM ZUR HANDHABUNG EINES GEGENSTANDS**
SUCTION GRIPPING SYSTEM FOR HANDLING AN OBJECT
SYSTÈME DE PINCE ASPIRANTE PERMETTANT DE MANIPULER UN OBJET

(43) Veröffentlichungstag der Anmeldung: 25.09.2019
(73) Patentinhaber: Carl Zeiss Vision International GmbH, 73430 Aalen (DE)
(72) Erfinder: Kurz, Norbert, 73434 Aalen (DE)
(74) Vertreter: Altmann Stößel Dick Patentanwälte PartG mbB

(56) Entgegenhaltungen:
- WO-A2-2017/043895
- DE-U1-202010 015 939
- KR-B1- 101 504 174

## Beschreibung

### Gebiet der Erfindung

Die vorliegende Erfindung betrifft ein Sauggreifsystem und ein Verfahren zur Handhabung mindestens eines Gegenstands, ein Verfahren zur Herstellung mindestens eines Brillenglases sowie eine Verwendung des Sauggreifsystems. Das Sauggreifsystem und das Verfahren können hierbei insbesondere für eine möglichst kraft- und reibungsarme Beaufschlagung eines handzuhabenden Gegenstands, insbesondere eines optischen Elements, bevorzugt von Brillengläsern, eingerichtet sein, vorzugsweise für eine Fixierung und Aufnahme des Gegenstands durch das Sauggreifsystem.

### Stand der Technik

Aus dem Stand der Technik sind Vorrichtungen zum Ansaugen, Anheben, Transportieren und Neuplatzieren von Werkstücken bekannt. Insbesondere in der industriellen Fertigung kommen derartige Vorrichtungen und Verfahren seit Jahrzehnten zum Einsatz.

DE 20 2010 015 939 U1 offenbart einen gattungsgemäßen Sauggreifer zum Ansaugen, Anheben, Transportieren und Neuplatzieren von Werkstücken, bestehend aus einem Gehäuse, welches unterseitig mit einem Drehkörper ausgestattet ist, an dem zumindest ein Sauger angeordnet ist, wobei Gehäuse und Drehkörper eine an eine Unterdruckquelle angeschlossene vakuumdurchlässige Öffnung zum Ansaugen der Werkstücke aufweisen, wobei der Drehkörper oberseitig als Kalotte ausgeformt ist und am Gehäuse, welches unterseitig mit einer Lagerpfanne versehen ist, sphärisch beweglich gelagert wird, wobei die Kalotte durch mindestens einen Magneten in die Lagerpfanne gezogen werden kann.

Trotz zahlreicher Vorteile beinhaltet dieser Sauggreifer noch Verbesserungspotenzial. Beispielsweise ist üblicherweise ein hoher Kraftaufwand bei einem Aufsetzen des Saugers notwendig, so dass ein Einsatz bei Gegenständen mit empfindlicher Oberfläche nur bedingt möglich ist. Weiterhin wirkt sich in der Regel eine Haltekraft eines Magneten einschränkend auf eine Beweglichkeit, beispielsweise die Beweglichkeit zwischen Kugelkalotte und Kugelpfanne, aus. Insbesondere kann die Haltekraft des Magneten in der Regel eine Reibungskraft zwischen der Kugelkalotte und der Kugelpfanne erhöhen, wodurch eine hohe Aufsetzkraft auf das Werkstück notwendig wird, bevor dieses eine Auslenkung um den Systemmittelpunkt ausführen kann. Insbesondere kann eine Rückstellung aus einer ausgelenkten Position in eine neutrale Position üblicherweise nur durch einen Zwischenschritt erfolgen, wie beispielsweise durch ein Aufsetzen auf eine plane Fläche oder durch erhöhten Kraftaufwand und eine Relativbewegung auf einer Oberfläche des Werkstücks. Zudem sind die aus dem Stand der Technik für die Rückstellung eingesetzten Einrichtungen in der Regel systembedingt nicht in der Lage, eine vollständige Rückstellung, insbesondere eine Rückzentrierung, zu ermöglichen.

### Aufgabe der Erfindung

Vor dem Hintergrund der DE 20 2010 015 939 U1 besteht die Aufgabe der vorliegenden Erfindung darin, ein Sauggreifsystem und ein Verfahren zur Handhabung mindestens eines Gegenstands, ein Verfahren zur Herstellung mindestens eines Brillenglases sowie eine Verwendung des Sauggreifsystems bereitzustellen, welche die aufgeführten Nachteile und Einschränkungen des Standes der Technik zumindest teilweise überwinden.

### Offenbarung der Erfindung

Diese Aufgabe wird gelöst durch ein Sauggreifsystem gemäß Anspruch 1 und ein Verfahren zur Handhabung mindestens eines Gegenstands gemäß Anspruch 12, durch ein Verfahren zur Herstellung mindestens eines Brillenglases gemäss Anspruch 14 sowie durch eine Verwendung des Sauggreifsystems gemäß Anspruch 15. Bevorzugte Ausgestaltungen, welche einzeln oder in Kombination realisierbar sind, sind in den abhängigen Ansprüchen dargestellt.

Im Folgenden werden die Begriffe "haben", "aufweisen", "umfassen" oder "einschließen" oder beliebige grammatikalische Abweichungen davon in nicht-ausschließlicher Weise verwendet. Dementsprechend können sich diese Begriffe sowohl auf Situationen beziehen, in welchen, neben dem durch diese Begriffe eingeführten Merkmal, keine weiteren Merkmale vorhanden sind oder auf Situationen, in welchen ein oder mehrere weitere Merkmale vorhanden sind. Beispielsweise kann sich der Ausdruck "A hat B", "A weist B auf, "A umfasst B" oder "A schließt B ein" sowohl auf die Situation beziehen, in welcher, abgesehen von B, kein weiteres Element in A vorhanden ist, d.h. auf eine Situation, in welcher A ausschließlich aus B besteht, als auch auf die Situation, in welcher, zusätzlich zu B, ein oder mehrere weitere Elemente in A vorhanden sind, beispielsweise Element C, Elemente C und D oder sogar weitere Elemente.

In einem ersten Aspekt betrifft die vorliegende Erfindung ein Sauggreifsystem zur Handhabung mindestens eines Gegenstands. Das Sauggreifsystem umfasst eine Saugkalotte zur Handhabung des mindestens einen Gegenstands und ein zur Saugkalotte korrespondierend ausgestaltetes Gegenstück. Ferner sind ein magnetisches Element sowie eine beweglich gelagerte magnetisierbare Kugel vorgesehen, wobei die Kugel und das magnetische Element magnetisch wechselwirkbar zueinander angeordnet sind, um eine räumliche Lage der Saugkalotte in Bezug auf das Gegenstück zu beeinflussen.

Der Begriff "Sauggreifsystem" bezeichnet grundsätzlich eine beliebige Vorrichtung, welche zur Handhabung mindestens einen Gegenstands mittels Druckes, insbesondere eines auf den Gegenstand einwirkenden Unterdrucks, ausgestattet ist. Zu diesem Zweck umfasst das Sauggreifsystem die Saugkalotte, unter welcher im Rahmen der vorliegenden Erfindung grundsätzlich ein beliebiges Element verstanden wird, welches dazu eingerichtet ist, seine Position und/oder Form derart zumindest teilweise an Form und/oder Position des Gegenstands anzupassen, dass hierdurch unter Verwendung des Drucks, vorzugsweise des Unterdrucks, die Handhabung des Gegenstands erfolgen kann. Insbesondere kann der Unterdruck dazu eingesetzt werden, damit der Gegenstand bezüglich der Saugkalotte fixiert und folglich durch die Saugkalotte aufgenommen werden kann. Weiterhin kann durch das Erzeugen des Unterdrucks die Saugkalotte relativ zu dem Gegenstück fixiert werden. Insbesondere kann eine räumliche Fixierung der Saugkalotte relativ zu dem Gegenstück zum Beispiel durch eine Ansaugung der Saugkalotte an das Gegenstück aufgrund der Erzeugung des Unterdrucks erreicht werden. Zudem kann durch das Erzeugen des Unterdrucks ein Überwinden der magnetischen Wechselwirkung, beispielsweise ein Überwinden der wechselwirkenden Kraft, zwischen der Kugel und dem magnetischen Element erreicht werden. Zum Beaufschlagen der Saugkalotte mit dem Druck, vorzugsweise mit Unterdruck, kann vorzugsweise ein mindestens ein Drucksystem vorgesehen sein.

Der Begriff "Handhaben" bezeichnet im Rahmen der vorliegenden Erfindung grundsätzlich eine zerstörungsfreie Einwirkung auf den handzuhabenden Gegenstand. Vorzugsweise wird darunter verstanden, dass der Gegenstand in Bezug auf das Sauggreifsystem oder eines Teils hiervon, insbesondere in Bezug auf die Saugkalotte, fixiert und folglich durch das Sauggreifsystem, bevorzugt durch die Saugkalotte, aufgenommen werden kann.

Insbesondere kann die Saugkalotte oder eine in ihr eingebrachte Aussparung eine ganz oder zumindest teilweise sphärisch ausgestaltete Form aufweisen. Der Begriff der "sphärisch ausgestalteten Form" bezieht sich hierbei auf eine geometrische Form, die einem Abschnitt einer Kugel zumindest näherungsweise entspricht. Durch einen hierdurch möglichen hohen Freiheitsgrad bei einer Rotation der Saugkalotte können die Saugkalotte und das zur Saugkalotte korrespondierend ausgestaltete Gegenstück vorzugsweise miteinander wechselwirken, beispielsweise ähnlich einem Zusammenwirken eines Gelenks. Hierbei können die Saugkalotte und das Gegenstück des Sauggreifsystems besonders bevorzugt als mechanisch voneinander getrennte Objekte vorgesehen sein, welche insbesondere an einer Trennlinie voneinander getrennt sein können, wobei die beiden Objekte lösbar miteinander verbunden sein können, insbesondere mittels Dichtungen.

Das "Gegenstück" bezeichnet im Rahmen der vorliegenden Erfindung grundsätzlich eine beliebige Vorrichtung, welche korrespondierend zu der Saugkalotte ausgestaltet ist. Hierbei kann das Gegenstück als Gehäuse oder als Teil eines Gehäuses ausgestaltet sein, wobei das "Gehäuse" grundsätzlich eine beliebige Vorrichtung bezeichnet, welche das Sauggreifsystem vollständig oder teilweise umschließt und welche vorzugsweise dem Sauggreifsystem eine mechanische Stabilität und/oder eine Stabilität gegenüber Umwelteinflüssen verleiht. Insbesondere kann das Gegenstück ganz oder teilweise aus mindestens einem Kunststoffmaterial hergestellt sein. Alternativ oder zusätzlich kann das Gegenstück auch ganz oder teilweise aus mindestens einem Metall, insbesondere aus einer metallischen Legierung, vorzugsweise aus einem nicht magnetisch und/oder nicht magnetisierbaren Metall, wie beispielsweise Aluminium, hergestellt sein, um die Funktion der Kugel möglichst wenig zu beeinträchtigen. Die Saugkalotte kann bevorzugt einen nicht magnetisierbaren Werkstoff oder einen nur geringfügig magnetisierbaren Werkstoff umfassen, während für die Kugel vorzugsweise ein möglichst gut magnetisierbarer Werkstoff ausgewählt werden kann.

Unter dem "Drucksystem" kann im Rahmen der vorliegenden Erfindung grundsätzlich ein beliebiges System verstanden werden, welches dazu eingerichtet ist, einen Druck, insbesondere eine auf eine Fläche wirkende Kraft, zu führen und/oder zu leiten. Beispielsweise kann das Drucksystem eingerichtet sein, um eine gewünschte Fläche mit dem Druck zu beaufschlagen, und/oder um den Druck an eine gewünschte Fläche zu transportieren. Insbesondere kann das Drucksystem dazu eingerichtet sein, um die Kraft zumindest auf einen Teil der Oberfläche des zu handhabenden Gegenstands zu leiten. Unter einem "Druck" kann dabei im Rahmen der vorliegenden Erfindung grundsätzlich eine beliebige Kraft pro Fläche verstanden werden. Insbesondere kann der Druck eine auf eine Fläche wirkende Kraft sein, beispielsweise eine positiv oder negativ wirkende Kraft. Vorzugsweise kann es sich bei dem Druck um einen von einem Umgebungsdruck verschiedenen Druck handeln. Insbesondere kann der Druck ein Unterdruck sein, beispielsweise kann die von dem Druck ausgeübte Kraft pro Fläche geringer sein als eine von dem Umgebungsdruck ausgeübte Kraft pro Fläche.

Unter der "magnetisierbaren Kugel" kann im Rahmen der vorliegenden Erfindung grundsätzlich ein beliebiges Element verstanden werden, welches eine dreidimensional rotationssymmetrische Form, beispielsweise eine Kugelform, aufweist und dazu eingerichtet ist, um unter einem Einfluss eines Magnetfeldes dieses zu verstärken und/oder selbst ein Magnetfeld auszubilden. Abweichungen von der Kugelform sind jedoch möglich, solange dadurch die Rotation dieses beweglich gelagerten Elements nicht oder nur unwesentlich beeinträchtigt wird. Vorzugsweise kann die magnetisierbare Kugel ganz oder teilweise aus einem ferromagnetischen Material, beispielsweise aus einem Metall, insbesondere aus Eisen, Kobalt, Nickel oder einer Kombination daraus, hergestellt sein. Alternativ oder zusätzlich kann die magnetisierbare Kugel auch einen ferromagnetischen Kunststoff umfassen, insbesondere ein magnetodielektrisches Material, beispielsweise ein mit Weicheisen-Partikeln versehener Thermoplast.

Unter dem "magnetischen Element" kann im Rahmen der vorliegenden Erfindung grundsätzlich ein beliebiges Bauteil verstanden werden, welches dazu eingerichtet ist, um ein Magnetfeld zu erzeugen. Vorzugsweise kann es sich bei dem magnetischen Element um einen ringförmig ausgebildeten Permanent- oder Dauermagneten handeln. Alternativ kann das magnetische Element ausgewählt sein aus einem Elektromagneten. Unabhängig von der Art des magnetischen Elements kann das magnetische Element räumlich ebenfalls als Kugelkalotte oder, bevorzugt, als Magnetscheibe oder ausgestaltet sein. In einer besonders bevorzugten Ausgestaltung die Magnetscheibe über eine erste Oberfläche und eine der ersten Oberfläche gegenüberliegend angeordnete zweite Oberfläche verfügen, wobei entgegengesetzt ausgerichteten magnetischen Pole des magnetische Elements jeweils auf der ersten Oberfläche und der zweiten Oberfläche einander gegenüber liegen. Auf diese Weise lassen sich Magnetfeldlinien erzeugen, welche über eine bevorzugte Ausrichtung verfügen.

Gemäß der vorliegenden Erfindung wird vorgeschlagen, die beweglich gelagerte magnetisierbare Kugel und das magnetische Element in dem Sauggreifsystem magnetisch wechselwirkbar zueinander anzuordnen. Hierzu kann insbesondere kann das magnetische Element dazu eingerichtet sein, um eine magnetische Wechselwirkung mit der Kugel, insbesondere der magnetisierbaren Kugel, zu ermöglichen, um eine räumliche Lage der Saugkalotte in Bezug auf das Gegenstück zu beeinflussen. Hierbei können die Kugel und das magnetische Element derart zueinander magnetisch wechselwirkbar angeordnet sein, um beispielsweise eine gewünschte räumliche Lage der Saugkalotte und/oder des Gegenstücks einzustellen. Weiterhin können die Kugel und das magnetische Element derart magnetisch wechselwirkbar zueinander angeordnet sein, um ohne Einwirkung äußerer Kräfte in eine Ausgangsposition zurückzukehren, insbesondere in eine Ausgangsposition der räumlichen Lage der Saugkalotte in Bezug auf das Gegenstück.

Unter den Begriffen "magnetisch wechselwirkbar" oder "magnetische Wechselwirkung" wird im Rahmen der vorliegenden Erfindung grundsätzlich eine gegenseitige Beeinflussung der mindestens einen magnetischen Elements und der magnetisierbaren Kugel in Folge auf einer Kraftwirkung zwischen dem magnetischen Element und der Kugel verstanden. Hierbei kann die Kraftwirkung zwischen dem magnetischen Element und der Kugel über ein Magnetfeld vermittelt werden, insbesondere entlang der durch das magnetische Element erzeugten Magnetfeldlinien. Das Magnetfeld kann dabei insbesondere von dem magnetischen Element erzeugt werden und auf die magnetisierbare Kugel wirken. Bei dem magnetischen Element kann es sich dabei um einen Magneten, um einen magnetisierten und/oder magnetisierbaren Gegensand und/oder um bewegte elektrische Ladungen handeln.

Weiterhin kann das Gegenstück zur Aufnahme eines ersten Elements eingerichtet sein, während die Saugkalotte zur Aufnahme eines von dem ersten Element verschiedenen zweiten Elements eingerichtet sein kann. Unter dem Begriff "aufnehmen" kann im Rahmen der vorliegenden Erfindung grundsätzlich eine beliebige Lagerung eines beliebigen Elements verstanden werden. Beispielsweise kann das in dem Gegenstück aufgenommene erste Element ganz oder teilweise von dem Gegenstück umgeben, beispielsweise in mindestens einer Ebene umschlossen, sein. Insbesondere kann das in der Saugkalotte aufgenommene zweite Element beispielsweise ganz oder teilweise von der Saugkalotte umgeben, beispielsweise in mindestens einer Ebene umschlossen, sein.

Sowohl das erste Element als auch das zweite Element können erfindungsgemäß ausgewählt sein aus der beweglich gelagerten magnetisierbaren Kugel und dem magnetischen Element, wobei sich, wie bereits erwähnt, das erste Element und das zweite Element voneinander unterscheiden. In einer bevorzugten Ausgestaltung kann somit das Gegenstück die beweglich gelagerte magnetisierbare Kugel aufweisen, während die Saugkalotte das magnetische Element umfasst. In einer alternativen Ausgestaltung kann das Gegenstück das magnetische Element aufweisen, während die Saugkalotte die beweglich gelagerte magnetisierbare Kugel umfasst.

In einer bevorzugten Ausgestaltung kann die Saugkalotte einen Saugaufsatz umfassen. Insbesondere kann der Saugaufsatz eingerichtet sein, sich an einen Teil einer Oberfläche des Gegenstands anzupassen. Weiterhin kann der Saugaufsatz eingerichtet sein, um den Teil der Oberfläche des Gegenstands luftdicht abzuschließen. Insbesondere kann ein luftdichtes Abschließen des Teils der Oberfläche genau dann auftreten, wenn die Saugkalotte mit einem Unterdruck beaufschlagt ist. Vorzugsweise kann der Saugaufsatz insbesondere eingerichtet sein sich nur an einen Teil der Oberfläche anzupassen, um zu verhindern, dass bei einem Beaufschlagen der Saugkalotte mit dem Unterdruck der gesamte Gegenstand eingesaugt wird.

In einer weiterhin bevorzugten Ausgestaltung können das Gegenstück und die Saugkalotte insbesondere dazu eingerichtet sein, um einen luftdicht verschließbaren Hohlraum zwischen dem Gegenstück und der Saugkalotte auszubilden. Beispielsweise kann der luftdicht verschließbare Hohlraum zwischen dem Gegenstück und der Saugkalotte genau dann luftdicht verschlossen werden, wenn die Saugkalotte mit dem Unterdruck beaufschlagt ist. Insbesondere kann der luftdicht verschließbare Hohlraum durch ein Aneinanderfügen eines Bereichs der Oberfläche der Saugkalotte und einer Dichtkante, über welche das Gegenstück verfügt, ausbildbar sein.

Die Saugkalotte kann vorzugsweise einen fest mit ihr verbundenen Auslenkanschlag aufweisen. Beispielsweise kann eine Relativbewegung der Saugkalotte zum Gegenstück mittels des Auslenkanschlags einschränkbar sein. Beispielsweise kann die Relativbewegung der Saugkalotte zum Gegenstück auf einen Winkelbereich aus einem Bereich von 10° bis 30°, insbesondere 20°, begrenzt sein. Insbesondere kann die Dichtkante eine Bewegung des Auslenkanschlags begrenzen.

Das Drucksystem kann insbesondere mit dem luftdicht verschließbaren Hohlraum verbindbar sein. Beispielsweise kann das Drucksystem direkt oder indirekt an den luftdicht verschließbaren Hohlraum angeschlossen sein.

In einer besonderen Ausgestaltung kann die magnetisierbare Kugel derart beweglich gelagert sein, das sie das magnetische Element an mindestens einem Punkt berühren kann. Insbesondere kann die Kugel das magnetische Element an einem ausgezeichneten Punkt, an welchem sie in einer Abrollbewegung auf das magnetische Element trifft, berühren.

Wie bereits erwähnt, kann das magnetische Element insbesondere ausgewählt sein aus einem Permanentmagnet oder einem Elektromagnet. Vorzugsweise kann der Permanentmagnet oder Dauermagnet dabei ein hartmagnetisches Material umfassen, beispielsweise eine Legierung aus Eisen, Cobalt, Nickel oder Ferriten. Insbesondere kann der Permanentmagnet ein Magnetfeld, beispielsweise ein statisches Magnetfeld, aufweisen, ohne elektrischen Stromfluss zu benötigen. Alternativ, kann es sich bei dem magnetischen Element auch um einen Elektromagneten handeln. Beispielsweise kann der Elektromagnet mindestens eine Spule umfassen, in der sich bei Stromdurchfluss ein magnetisches Feld, insbesondere ein Magnetfeld, bildet.

Wie bereits erwähnt, kann das magnetische Element insbesondere als Magnetscheibe oder als eine Kugelkalotte ausgeführt sein. Vorzugsweise kann die Magnetscheibe mindestens zwei parallel ausgestaltete Oberflächen aufweisen, vorzugsweise mindestens zwei kreis- oder ringförmig ausgestaltete, parallel zueinander angeordnete Oberflächen. Alternativ kann das magnetische Element als eine Kugelkalotte ausgeführt sein. Beispielsweise kann die Kugelkalotte an eine dem Gegenstück zugewandte Oberfläche der Saugkalotte oder an die Kugel oder an eine der Saugkalotte zugewandten Oberfläche des Gegenstücks angepasst sein. Vorzugsweise kann die Kugelkalotte derart an die dem Gegenstück zugewandte Oberfläche der Saugkalotte oder an die Kugel oder an die der Saugkalotte zugewandten Oberfläche des Gegenstücks angepasst sein, um mit der Oberfläche der Saugkalotte oder mit der Oberfläche des Gegenstücks eine gemeinsame Oberfläche, beispielsweise eine kalottenförmige Oberfläche, auszubilden.

Vorzugsweise kann eine Kugelaufnahme zur Aufnahme der Kugel vorgesehen sein. Insbesondere kann die Kugelaufnahme für eine dauernde, bewegliche Lagerung der Kugel eingerichtet sein. Bevorzugt kann die Kugelaufnahme ferner derart ausgestaltet sein, dass eine Rotationsbewegung der Kugel ausführbar ist. Insbesondere kann eine Rotationsbewegung der Kugel innerhalb der Kugelaufnahme ausführbar sein, insbesondere ermöglicht werden. Weiterhin kann die Kugelaufnahme derart ausgestaltet sein, dass eine begrenzte translatorische Bewegung der Kugel in mindestens eine Richtung ausführbar ist. Vorzugsweise kann die Kugelaufnahme derart ausgestaltet sein, um die translatorische Bewegung der Kugel senkrecht zu der dem Gegenstück zugewandten Oberfläche der Saugkalotte zu ermöglichen. Weiterhin kann insbesondere das Drucksystem mit der Kugelaufnahme verbindbar sein. Vorzugsweise kann das Drucksystem derart mit der Kugelaufnahme verbindbar sein, um ein Führen des Drucks, insbesondere der Kraft pro Fläche, in die Kugelaufnahme, vorzugsweise durch die Kugelaufnahme hindurch, zu ermöglichen.

Das Gehäuse kann insbesondere einen Gehäusedeckel aufweisen. Beispielsweise kann der Gehäusedeckel dazu eingerichtet sein, dass die Kugel in das als Gehäuse ausgestaltete Gegenstück einbringbar ist. Hierzu kann der Gehäusedeckel dazu eingerichtet sein, um ein Einbringen der Kugel in eine bevorzugt in dem Gegenstück angeordnete Kugelaufnahme zu ermöglichen.

In einer besonderen Ausgestaltung kann das Drucksystem mindestens einen Anschluss an ein externes System zu Bereitstellung und/oder zur Entnahme eines Druckfluids, beispielsweise von Druckluft, aufweisen, wobei der Anschluss beispielsweise durch das Gehäuse, insbesondere durch den Gehäusedeckel, führbar ist.

In einer besonderen Ausgestaltung kann das Sauggreifsystem weiterhin mindestens ein Ausgleichselement aufweisen. Das Ausgleichselement kann dabei insbesondere eingerichtet sein, um unterschiedliche Abmessungen von verschiedenen zu handhabenden Gegenständen auszugleichen.

In einer besonderen Ausgestaltung kann das Sauggreifsystemüber über eine Trennlinie verfügen, beispielsweise eine Trennstelle, beispielsweise eine natürliche Trennstelle, welche insbesondere zwischen der Kugel und dem magnetischen Element verlaufen kann. Die Trennlinie kann beispielsweise als Trennstelle für eine Reparatur oder einen Austauschvorgang verwendet werden, insbesondere als Trennstelle für einen Werkzeugwechsel, beispielsweise für einen Austausch eines Saugaufsatzes, vorzugsweise für einen Wechsel der Saugkalotte, dienen. Hierbei kann vorzugsweise durch eine Krafteinwirkung in Form eines Unterdrucks (Zug) die im Ruhezustand zwischen der Kugel und dem magnetischen Element herrschende magnetische Kraft überwunden und so die Saugkalotte von dem Gegenstück abgetrennt werden. Hieraufhin kann die Saugkalotte gereinigt und/oder ersetzt werden und anschließend wieder eingesetzt werden. Alternativ oder zusätzlich kann eine verschmutzte und/oder beschädigte Saugkalotte einfach und zügig durch eine andere Saugkalotte ausgetauscht werden. In einer weiteren Ausgestaltung kann eine eingesetzte Saugkalotte durch eine andere Saugkalotte ersetzt werden, welche insbesondere über eine abweichende Form verfügen kann und sich somit besser an die Form und/oder die Position des handzuhabenden Gegenstands anpassen kann.

In einem weiteren Aspekt betrifft die vorliegende Erfindung ein Verfahren zur Handhabung mindestens eines Gegenstands. Das Verfahren umfasst die folgenden Schritte, vorzugsweise in der angegebenen Reihenfolge. Auch eine andere Reihenfolge ist grundsätzlich möglich. Insbesondere ist auch eine ganz oder teilweise zeitgleiche Ausführung der Verfahrensschritte ist möglich. Weiterhin können einzelne, mehrere oder alle Schritte des Verfahrens widerholt, insbesondere mehr als einmal, ausgeführt werden. Das Verfahren kann, zusätzlich zu den genannten Verfahrensschritten auch weitere Verfahrensschritte umfassen.

Die Verfahrensschritte des Verfahrens zur Handhabung mindestens eines Gegenstands sind:
a) Bereitstellen eines Sauggreifsystems in einem Ausgangszustand;
b) Positionieren des Sauggreifsystems in Bezug auf den zu handhabenden Gegenstand;
c) Erzeugen eines Unterdrucks zur Handhabung des Gegenstands;
d) Freigeben des Unterdrucks zur Beendigung der Handhabung des Gegenstands; und
e) Zurückführen des Sauggreifsystems in den Ausgangszustand mittels einer magnetischen Wechselwirkung der Kugel und des magnetischen Elements.

Bei dem Bereitstellen des Sauggreifsystems in einem Ausgangszustand in Verfahrensschritt a) handelt es sich insbesondere um ein Sauggreifsystem, welches an anderer Stelle in diesem Dokument näher beschrieben wird. Dementsprechend kann für Definitionen und optionale Ausgestaltungen weitgehend auf die Beschreibung des Sauggreifsystems verwiesen werden.

Gemäß Verfahrensschritt b) passt die Saugkalotte hierzu ihre Position und/oder Form derart zumindest teilweise an Form und/oder Position des Gegenstands an, dass unter Verwendung des Unterdrucks die gewünschte Handhabung des Gegenstands erfolgen kann.

Durch das Erzeugen des Unterdrucks gemäß Verfahrensschritt c) wird die Saugkalotte relativ zu dem Gegenstück fixiert. Insbesondere kann eine räumliche Fixierung der Saugkalotte relativ zu dem Gegenstück zum Beispiel durch eine Ansaugung der Saugkalotte an das Gegenstück aufgrund der Erzeugung des Unterdrucks erreicht werden. Durch das Erzeugen des Unterdrucks kann somit ein Überwinden der magnetischen Wechselwirkung, beispielsweise ein Überwinden der wechselwirkenden Kraft, zwischen der Kugel und dem magnetischen Element erreicht werden. Weiterhin kann durch das Erzeugen des Unterdrucks der Gegenstand bezüglich der Saugkalotte fixiert und folglich durch die Saugkalotte aufgenommen werden.

Gemäß Verfahrensschritt d) wird die Handhabung des Gegenstands durch ein Freigeben des Unterdrucks beendet. Insbesondere kann das Freigeben des Unterdrucks bevorzugt durch ein Belüften des Sauggreifsystems mittels eines dafür vorgesehenen Drucksystems erfolgen. Alternativ kann das Freigeben des Unterdrucks auch durch ein Beaufschlagen des Drucksystems mit Druck, beispielsweise mit einem geringen Überdruck, erfolgen.

Gemäß Verfahrensschritt e) wird das Sauggreifsystem durch die magnetische Wechselwirkung der Kugel und des magnetischen Elements in den Ausgangszustand zurückgeführt. Bevorzugt kann das Sauggreifsystem in einen Anfangszustand, welcher beispielsweise durch eine relative Position der Saugkalotte und des Gegenstücks zueinander charakterisiert ist und in welchem sich das Sauggreifsystem in Schritt a), bevorzugt zu Beginn des Verfahrens, befindet, zurückgeführt werden. Bevorzugt handelt es sich bei dem Ausgangszustand um eine Gleichgewichtslage, vorzugsweise um eine Gleichgewichtslage bezüglich der aufgrund der magnetischen Wechselwirkung wirkenden Kräfte, insbesondere um eine im Gleichgewicht stehende relative Position der Saugkalotte und des Gegenstücks zueinander, so dass die aufgrund der magnetischen Wechselwirkung zwischen der Kugel und dem magnetischen Element wirkende Kraft ein Minimum annehmen kann. Besonders bevorzugt befindet sich in dem Ausgangszustand die Kugel im Gleichgewicht bezüglich des magnetischen Elements, vorzugsweise ist die Kugel dabei zentriert in Bezug auf das magnetische Element, beispielsweise in der Mitte des magnetischen Elements, angeordnet.

In einem weiteren Aspekt betrifft die vorliegende Erfindung ein Verfahren zur Herstellung mindestens eines Brillenglases. Das Verfahren umfasst eine Handhabung des Brillenglases zumindest während der Herstellung des Brillenglases mittels eines Sauggreifsystems und/oder eines Verfahrens zur Handhabung mindestens eines Gegenstands, welche an anderer Stelle in diesem Dokument näher beschrieben sind. Dementsprechend kann für Definitionen und optionale Ausgestaltungen weitgehend auf die Beschreibung des Sauggreifsystems und des Verfahrens zur Handhabung mindestens eines Gegenstands verwiesen werden.

Unter einem "Brillenglas" wird im Rahmen der vorliegenden Erfindung grundsätzlich ein beliebiges Element verstanden, welches zu einer Beeinflussung von elektromagnetischen Wellen im Bereich des sichtbaren Spektralbereichs oder angrenzender Spektralbereiche eingerichtet ist, vorzugsweise um ein Sehen eines menschlichen oder tierischen Auges zu verändern, insbesondere zu verbessen. Hierzu kann ein Brillenglas vorzugsweise als brechende optische Linse oder als Linsensystem ausgestaltet sein. Vorzugsweise kann das Brillenglas ein optisch transparentes Material, insbesondere ausgewählt aus Glas, Quarz oder einem transparenten organischen Kunststoff, aufweisen.

Für weitere Einzelheiten in Bezug auf die vorliegenden Verfahren wird auf die übrige Beschreibung des Sauggreifsystems und des Verfahrens zur Handhabung mindestens eines Gegenstands verwiesen.

In einem weiteren Aspekt betrifft die vorliegende Erfindung eine Verwendung eines Sauggreifsystems zur Handhabung mindestens eines Gegenstands, wobei der Gegenstand ein optisches Element ist oder umfasst. Bei dem Sauggreifsystem handelt es sich insbesondere um ein Sauggreifsystem, welches an anderer Stelle in diesem Dokument näher beschrieben wird. Dementsprechend kann für Definitionen und optionale Ausgestaltungen weitgehend auf die Beschreibung des Sauggreifsystems verwiesen werden.

Unter einem "optischen Element" wird im Rahmen der vorliegenden Erfindung grundsätzlich ein beliebiges Element verstanden, welches zu einer Beeinflussung von elektromagnetischen Wellen im Bereich des sichtbaren Spektralbereichs oder angrenzender Spektralbereiche eingerichtet ist. Hierzu gehören insbesondere brechende oder nichtbrechende optische Elemente wie Linsen oder Linsensysteme, bevorzugt Brillengläser, oder Prismen. Andere optische Elemente sind jedoch möglich. Da derartige optische Elemente in der Regel ein optisch transparentes Material, insbesondere ausgewählt aus Glas, Quarz oder einem transparenten organischen Kunststoff, aufweisen, ist eine schonende Behandlung des optischen Elements und insbesondere seiner Oberfläche besonders vorteilhaft. Unter der "schonenden Behandlung" wird eine möglichst kraft- und reibungsarme Beaufschlagung des optischen Elements mit einer Vorrichtung zur Handhabung des optischen Elements verstanden, wozu sich das hier vorgeschlagene Sauggreifsystem in vorteilhafter Weise eignet. Für das Sauggreifsystem eignen sich vorzugsweise optische Elemente, welche, insbesondere abhängig von einer räumlichen Ausdehnung des Sauggreifsystems, vor allem der Saugkalotte, eine Größe von 1 cm bis 1 m, bevorzugt von 2 cm bis 50 cm, aufweisen.

Das erfindungsgemäße Sauggreifsystem, das auch als "Taumelsauger" bezeichnet werden kann, die vorliegenden Verfahren und die Verwendung weisen gegenüber herkömmlichen Vorrichtungen, Verfahren und Verwendungen zahlreiche Vorteile auf. Insbesondere kann beispielsweise ein notwendiger Kraftaufwand bei einem Aufsetzen des Sauggreifsystems auf den Gegenstand im Vergleich zu aus dem Stand der Technik bekannten Vorrichtungen verringert sein. Aus diesem Grund kann es möglich sein, dass das erfindungsgemäße Sauggreifsystem sowie das vorliegende Verfahren im Gegensatz zu herkömmlichen Vorrichtungen und Verfahren zur Handhabung von Gegenständen mit empfindlicherer Oberfläche geeignet sind. Insbesondere können sich das erfindungsgemäße Sauggreifsystem sowie die vorgeschlagenen Verfahren beispielsweise durch eine geringere Krafteinwirkung auf den zu handhabenden Gegenstand auszeichnen als herkömmliche Vorrichtungen und Verfahren. Beispielsweise kann es möglich sein, dass bei dem vorgeschlagenen Sauggreifsystem sowie den Verfahren eine Haltekraft des magnetischen Elements keine Reibung zwischen Gegenstück und Saugkalotte hervorruft, wodurch die zur Handhabung des Gegenstands notwendige Kraft, insbesondere die Kraft welche für eine Positionierung notwendig ist, im Gegensatz zu herkömmlichen Vorrichtungen und Verfahren, verringert ist.

Im Unterschied zu aus dem Stand der Technik bekannten Vorrichtungen, Verfahren und Verwendungen können das erfindungsgemäße Sauggreifsystem sowie die vorliegenden Verfahren ein automatisches oder selbstständiges Zurückkehren in eine Ausgangsposition ermöglichen. Insbesondere kann hierdurch beispielsweise auf einen Zwischenschritt in den Verfahren, vorzugsweise auf einen Zwischenschritt, welcher das Zurückkehren in die Ausgangsposition umfasst, verzichtet werden. Insbesondere kann auf einen Zwischenschritt, welcher das Zurückkehren in die Ausgangsposition mittels eigens dafür ausgelegter Elemente, verzichtet werden.

Zudem können das hier vorgeschlagene Sauggreifsystem sowie die vorgeschlagenen Verfahren eine einfachere Handhabung, insbesondere eine leichtgängigere oder reibungsärmere Bewegung im Vergleich zu herkömmlichen Vorrichtungen, Verfahren und Verwendungen aufweisen. Insbesondere können Reibungskräfte durch ein punktförmiges Anliegen der Kugel an dem magnetischen Element minimiert werden. Insbesondere können das hier vorgeschlagene Sauggreifsystem sowie die Verfahren ein leichtgängiges Abrollen der Kugel auf der Oberfläche des magnetischen Elements aufweisen. Dies kann beispielsweise dadurch ermöglicht werden, dass die Kugel, beispielsweise ähnlich wie in einem Kugellager, vorzugsweise rotatorisch frei beweglich ist und translatorisch in eine Richtung, insbesondere in eine vertikale Richtung, beispielsweise in eine z-Richtung, in der Kugelaufnahme beweglich ist und beispielsweise ähnlich wie in einem Käfig gehalten werden kann. Insbesondere der Freiheitsgrad in z-Richtung könnte dabei beispielsweise eventuell auftretende systembedingte Toleranzen, beispielsweise Toleranzen welche durch eine auftretende Abweichung einer flachen Scheibe zu einem Kugelabschnitt auftreten können, kompensieren.

Weiterhin können das erfindungsgemäße Sauggreifsystem, die vorliegenden Verfahren und die vorgeschlagene Verwendung im Vergleich zu herkömmlichen Vorrichtungen, Verfahren und Verwendungen eine Verbesserung bezüglich Reparaturen und Austauschvorgängen aufweisen. Insbesondere kann das Sauggreifsystem, beispielsweise das System, durch die magnetische Wechselwirkung, beispielsweise durch Magnetkräfte, zwischen der Kugel und dem magnetischen Element zusammengehalten werden. Vorzugsweise könnte eine Trennlinie, beispielsweise eine Trennstelle, beispielsweise eine natürliche Trennstelle, zwischen der Kugel und dem magnetischen Element verlaufen. Die Trennlinie kann beispielsweise als Trennstelle für eine Reparatur oder einen Austauschvorgang verwendet werden, insbesondere kann die Trennlinie als Trennstelle für einen Werkzeugwechsel, beispielsweise für einen Austausch eines Saugaufsatzes, vorzugsweise für einen Wechsel der Saugkalotte, dienen.

Insbesondere können das erfindungsgemäße Sauggreifsystem, die vorliegenden Verfahren und die vorgeschlagene Verwendung eine zuverlässigere Zentrierung, insbesondere ein zuverlässigeres zurückkehren in den Ausgangszustand, und somit eine zuverlässigere Handhabung des Gegenstands im Vergleich zu aus dem Stand der Technik bekannten Vorrichtungen, Verfahren und Verwendungen ermöglichen. Beispielsweise kann eine geringere Reibung während eines Zentriervorgangs insbesondere aufgrund der punktförmigen Anlage der Kugel, insbesondere der Stahlkugel, an dem magnetischen Element, beispielsweise an der Magnetscheibe, erreicht werden. Insbesondere kann es sein, dass ausschließlich Rollreibung zwischen der Kugel und dem magnetischen Element vorliegt. Insbesondere kann die Stahlkugel durch Magnetfeldlinien der Magnetscheibe angezogen werden. Beispielsweise können die Magnetfeldlinien in der Mitte der Magnetscheibe, insbesondere in der Mitte der jeweiligen Pole der Magnetscheibe, eine hohe Dichte, insbesondere die höchste Dichte, aufweisen. Insbesondere kann die Kugel durch die hohe Dichte der Magnetfeldlinien in der Mitte der Magnetscheibe beispielsweise am stärksten angezogen werden. Vorzugsweise kann die Kugel, beispielsweise die Stahlkugel, folglich aufgrund der geringen Reibung zwischen Kugel und magnetischem Element durch die hohe Dichte der Magnetfeldlinien in der Mitte der Magnetscheibe zentriert werden, insbesondere kann auf diese Weise das Sauggreifsystem in seinen Ausgangszustand zurückgeführt werden. Weiterhin kann durch das erfindungsgemäße Sauggreifsystem sichergestellt sein, dass die Kugel, beispielsweise ein Meridian der Kugel, nicht über einen Rand des magnetischen Elements, insbesondere nicht über eine Kante der Magnetscheibe, gedrückt, beispielsweise verschoben, wird. Auf diese Weise könnte beispielsweise ein gelangen der Kugel in verdichtete Feldlinien an der Kante der Magnetscheibe, beispielsweise mittels des Auslenkanschlags, verhindert werden.

### Kurze Beschreibung der Figuren

Weitere Einzelheiten und Merkmale der Erfindung ergeben sich aus der nachfolgenden Beschreibung von bevorzugten Ausführungsbeispielen, insbesondere in Verbindung mit den Unteransprüchen. Hierbei können die jeweiligen Merkmale für sich alleine oder zu mehreren in Kombination miteinander verwirklicht sein. Die Erfindung ist nicht auf die Ausführungsbeispiele beschränkt. Die Ausführungsbeispiele sind in den Figuren schematisch dargestellt. Gleiche Bezugsziffern in den einzelnen Figuren bezeichnen dabei gleiche oder funktionsgleiche bzw. hinsichtlich ihrer Funktionen einander entsprechende Elemente.

Im Einzelnen zeigen:
- Figur 1A: eine Schnittdarstellung eines Ausführungsbeispiels eines S auggreifsystems;
- Figuren 1B und 1C: Ausschnitte aus dem in Figur 1A dargestellten Ausführungsbeispiel des Sauggreifsystems;
- Figur 2: eine perspektivische Darstellung eines Ausschnitts aus einem Ausführungsbeispiel eines Sauggreifsystems;
- Figur 3: ein Ablaufdiagramm eines Ausführungsbeispiels eines Verfahrens zur Handhabung mindestens eines Gegenstands; und
- Figuren 4A bis 4C: Zwischenschritte eines Ausführungsbeispiels eines Verfahrens zur Handhabung mindestens eines Gegenstands.

### Ausführungsbeispiele

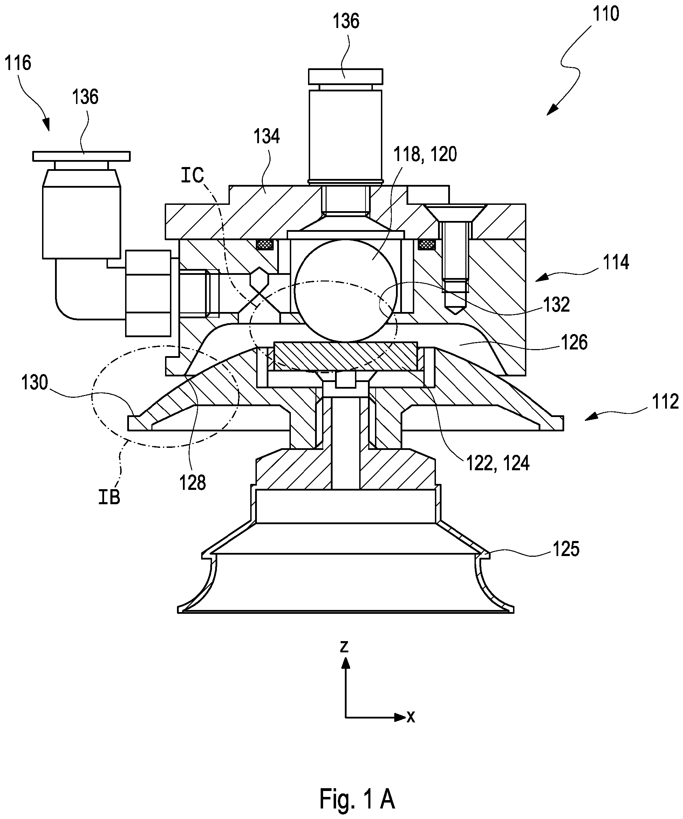

In Figur 1A ist ein Ausführungsbeispiel eines Sauggreifsystems 110 zur Handhabung mindestens eines Gegenstands (nicht dargestellt) in einer Schnittdarstellung gezeigt. Das Sauggreifsystem 110 umfasst eine Saugkalotte 112 zur Handhabung des mindestens einen Gegenstands mittels Druck und ein zur Saugkalotte 112 korrespondierend ausgestaltetes Gegenstück 114. Insbesondere zum Beaufschlagen der Saugkalotte 112 mit dem Druck, vorzugsweise mit einem Unterdruck, kann das Sauggreifsystem 110 mindestens ein Drucksystem 116 umfassen. Insbesondere sind ferner ein magnetisches Element 124 sowie eine beweglich gelagerte magnetisierbare Kugel 120 vorgesehen. Die Kugel 120 und das magnetische Element 124 sind dabei derart magnetisch wechselwirkbar zueinander angeordnet, um eine räumliche Lage der Saugkalotte 112 in Bezug auf das Gegenstück 114 zu beeinflussen. Das Gegenstück 114 kann dabei insbesondere zur Aufnahme eines ersten Elements 118 eingerichtet sein, wobei es sich bei dem ersten Element 118 in dem hier dargestellten Ausführungsbeispiel um die beweglich gelagerte magnetisierbare Kugel 120 handelt. Weiterhin ist die Saugkalotte 112 zur Aufnahme eines von dem ersten Element 118 verschiedenen zweiten Elements 122 eingerichtet, wobei es sich bei dem zweiten Element 122 in dem hier dargestellten Ausführungsbeispiel um das magnetische Element 124 handelt.

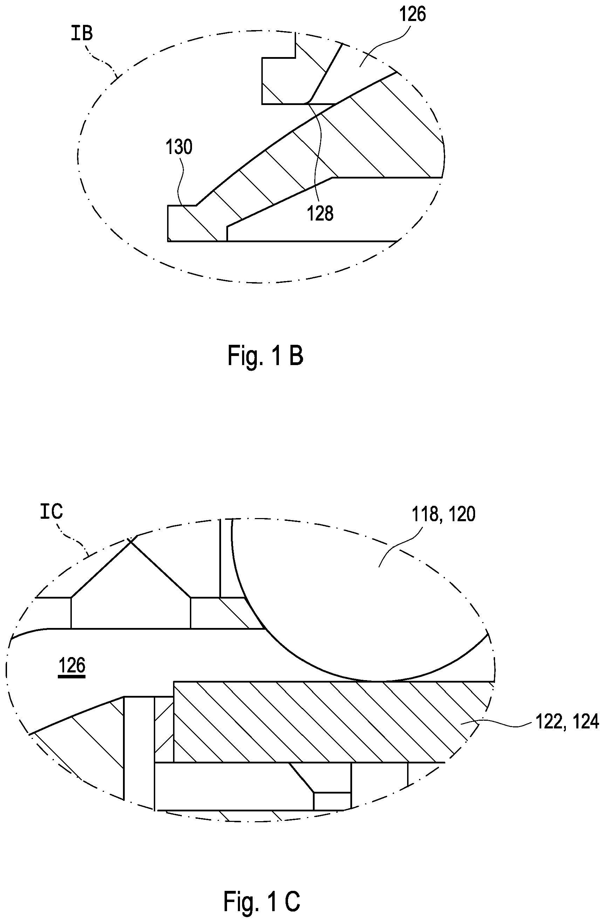

In der Ausführung gemäß Figur 1A umfasst die Saugkalotte 112 einen Saugaufsatz 125, welcher eingerichtet ist, sich an einen Teil einer Oberfläche des Gegenstands anzupassen. Der Saugaufsatz 125 kann weiterhin eingerichtet sein, um den Teil der Oberfläche des Gegenstands luftdicht abzuschließen. Vorzugsweise kann die Saugaufsatz 125 den Teil der Oberfläche des Gegenstands genau dann luftdicht abschließen, wenn die Saugkalotte 112 mit dem Unterdruck beaufschlagt ist. Insbesondere können das Gegenstück 114 und die Saugkalotte 112 derart eingerichtet sein, um einen luftdicht verschließbaren Hohlraum 126 zwischen dem Gegenstück 114 und der Saugkalotte 112 auszubilden. Bevorzugt kann das Drucksystem 116 mit dem luftdicht verschließbaren Hohlraum 126 verbindbar sein. Vorzugsweise kann der luftdicht verschließbare Hohlraum 126 durch ein Aneinanderfügen eines Bereichs der Oberfläche der Saugkalotte 112 und einer Dichtkante 128, über welche das Gegenstück 114 verfügt, ausbildbar sein. Die Dichtkante 128 ist insbesondere in dem in Figur 1B dargestellten Ausschnitt des in Figur 1A dargestellten Sauggreifsystems zu sehen. Figuren 1A und 1B zeigen weiterhin einen fest mit der Saugkalotte 112 verbundenen Auslenkanschlag 130. Insbesondere kann bevorzugt eine Relativbewegung der Saugkalotte 112 zum Gegenstück 114 mittels des Auslenkanschlags 130 einschränkbar sein. Vorzugsweise kann eine Bewegung des Auslenkanschlags 130 durch die Dichtkante 128 begrenzt sein.

Vorzugsweise können die Kugel 120 und das magnetische Element 124 derart angeordnet sein, dass die Kugel 120 das magnetische Element 124 an mindestens einem Punkt berührt. Diese Punktberührung ist insbesondere in dem in Figur 1C dargestellten Ausschnitt des in Figur 1A dargestellten Sauggreifsystems zu sehen.

Weiterhin ist in Figur 1A eine Kugelaufnahme 132 dargestellt, welche zur dauernden, beweglichen Lagerung der Kugel 120 eingerichtet sein kann. Ferner kann die Kugelaufnahme 132 derart ausgestaltet sein, dass eine Rotationsbewegung der Kugel 120 ausführbar ist. Weiterhin kann die Kugelaufnahme 132 derart ausgestaltet sein, dass eine begrenzte translatorische Bewegung der Kugel 120 in mindestens eine Richtung ausführbar ist. Beispielsweise kann insbesondere eine begrenzte translatorische Bewegung der Kugel 120 in z-Richtung ausführbar sein, insbesondere in Richtung der z-Achse des in Figur 1A illustrierten Koordinatensystems. Vorzugsweise kann ferner das Drucksystem 116 mit der Kugelaufnahme verbindbar sein.

Wie ebenfalls in Figur 1A illustriert, kann das Gegenstück 114 als Gehäuse ausgestaltet sein und vorzugsweise einen Gehäusedeckel 134 aufweisen. Der Gehäusedeckel 134 kann insbesondere dazu eingerichtet sein, dass die Kugel 120 von außen in das Gegenstück 114 einbringbar ist.

Weiterhin kann das Drucksystem 116 mindestens einen Anschluss 136 aufweisen. Wie in Figur 1A gezeigt, kann das Drucksystem vorzugsweise zwei Anschlüsse 136 aufweisen. Der Anschluss 136 kann dabei insbesondere durch das Gehäuse, vorzugsweise durch den Gehäusedeckel 134, führbar sein.

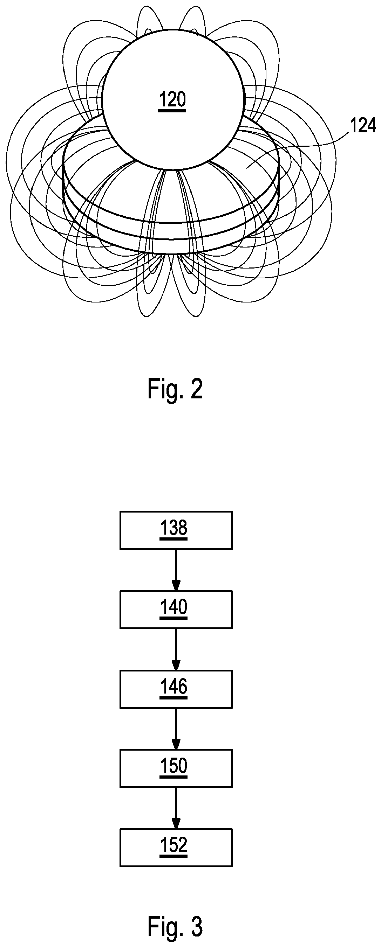

Figur 2 zeigt einen Ausschnitt eines Ausführungsbeispiels eines Sauggreifsystems, wobei ein als Dauermagnet ausgeführtes magnetisches Element 124, insbesondere ein Dauermagnet mit Nord- und Südpol, sowie dessen Magnetfeldlinien illustriert sind. Insbesondere können die Magnetfeldlinien, wie in Figur 2 illustriert, in der Mitte des magnetischen Elements 124, insbesondere in der Mitte der Pole des Dauermagneten, eine hohe Dichte aufweisen. Insbesondere kann die ebenfalls dargestellte Kugel 120 durch die hohe Dichte der Magnetfeldlinien in der Mitte des magnetischen Elements 124 am stärksten angezogen werden. Vorzugsweise kann das hier dargestellte Ausführungsbeispiel eine relative Position der Kugel 120 zu dem magnetischen Element 124 zeigen, welche die Kugel 120 und das magnetische Element 124 in einem Ausgangszustand des Sauggreifsystems einnehmen.

Figur 3 illustriert ein Ablaufdiagramm eines Ausführungsbeispiels eines Verfahrens zur Handhabung mindestens eines Gegenstands. Das Verfahren umfasst mehrere Schritte, vorzugsweise in der in dem Ablaufdiagramm illustrierten Reihenfolge. Auch eine andere Reihenfolge ist jedoch grundsätzlich möglich. Insbesondere ist auch eine ganz oder teilweise zeitgleiche Ausführung der Verfahrensschritte möglich. Weiterhin können einzelne, mehrere oder alle Schritte des hier illustrierten Ablaufdiagramms des Ausführungsbeispiels des Verfahrens widerholt, insbesondere mehr als einmal, ausgeführt werden. Das Verfahren kann, zusätzlich zu den illustrierten Verfahrensschritten auch weitere hier nicht dargestellte Verfahrensschritte umfassen.

Insbesondere umfasst das in Figur 3 illustrierte Verfahren einen Verfahrensschritt 138, welcher gemäß Schritt a) ein Bereitstellen des Sauggreifsystems 110 in einem Ausgangszustand umfasst. Insbesondere kann sich das in Figur 1A illustrierte Sauggreifsystem 110 in dem Ausgangszustand befinden, in welchem das Sauggreifsystem 110 in dem Verfahrensschritt 138 bereitgestellt wird. Vorzugsweise kann in dem Sauggreifsystem 110 in dem Ausgangszustand eine Kugel 120 und ein magnetisches Element 124 aufgenommen sein, wobei die Kugel 120 und das magnetische Element 124 vorzugsweise in einer in Figur 2 illustrierten relativen Position angeordnet sein können. Beispielsweise kann die Kugel 120 in der Kugelaufnahme 132 aufgenommen sein und das magnetische Element 124 an die Kugel 120 angezogen und zentriert sein, insbesondere können sich die Kugel 120 und das magnetische Element 124 berühren und in einem Gleichgewichtszustand befinden. Weiterhin kann der Ausgangszustand des Sauggreifsystems 110 beispielsweise sich dadurch auszeichnen, dass ein vorhandenes Drucksystem 116 nicht mit einem Druck beaufschlagt ist, sondern beispielsweise einen Umgebungsdruck aufweist. Vorzugsweise ist der Druck, insbesondere der Unterdruck, beispielsweise das Vakuum, besonders bevorzugt ein von dem Umgebungsdruck abweichender Druck innerhalb des Drucksystems 116, in dem Ausgangszustand des Sauggreifsystems 110 ausgeschaltet.

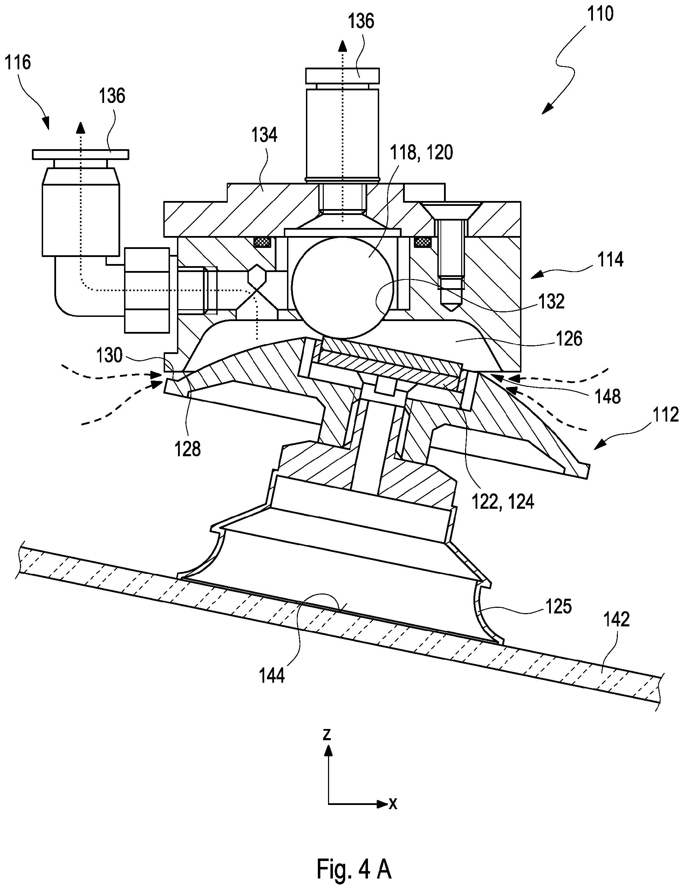

Das in Figur 3 illustrierte Verfahren umfasst weiterhin einen Verfahrensschritt 140, welcher gemäß Schritt b) ein Positionieren des Sauggreifsystems 110 in Bezug auf den zu handhabenden Gegenstand 142 umfasst. Vorzugsweise kann das Sauggreifsystem 110 insbesondere an einer hier nicht dargestellten Handlingseinheit, beispielsweise an einem Portal, insbesondere einem Portalkran, einem Roboter, beispielsweise an einem Arm des Roboters, oder einer ähnlichen Einrichtung befestigt und/oder geführt sein. Insbesondere kann das Sauggreifsystem 110 in Bezug auf den in Figur 4A dargestellten Gegenstand 142, beispielsweise ein Glas, bevorzugt ein Brillenglas, vorzugsweise ein Brillenglas mit entsprechendem Prisma, positioniert werden. Vorzugsweise kann sich die Saugkalotte 112 des Sauggreifsystems 110 dabei relativ zum Gegenstück 114 bewegen, beispielsweise eine Relativbewegung ausführen. Vorzugsweise kann sich die Saugkalotte 112 derart relativ zu dem Gegenstück 114 bewegen, insbesondere pendelnd bewegen, beispielsweise pendelnd relativ zu dem Gegenstück 114 auf einer sphärischen Bahn bewegen, um sich in Bezug auf den Gegenstand 142 anzupassen. Der Gegenstand 142 kann dabei, wie in Figur 4A illustriert, vorzugsweise bezüglich des Sauggreifsystems 110 schräg angeordnet sein. Insbesondere kann sich dabei der Saugaufsatz 125, wie in Figur 4A illustriert, an einen Teil einer Oberfläche 144 des Gegenstands 142 anpassen.

Weiterhin umfasst das in Figur 3 illustrierte Verfahren einen Verfahrensschritt 146, welcher gemäß Schritt c) ein Erzeugen eines Unterdrucks zur Handhabung des Gegenstands 142 umfasst. Vorzugsweise kann dabei das Drucksystem 116 mit einem Unterdruck, beispielsweise einem Vakuum, beaufschlagt werden. Insbesondere kann ein eventuell vorhandenes Fluid, beispielsweise Luft, durch den mindestens einen Anschluss 136, vorzugsweise durch zwei Anschlüsse 136, abgesaugt werden, wie beispielsweise mittels der durch die Anschlüsse 136 führenden Pfeile in Figur 4A illustriert. Dabei kann beispielsweise Luft durch einen Spalt 148, vorzugsweise durch einen ringförmigen Spalt 148, beispielsweise durch einen Ringspalt, zwischen dem Gegenstück 114 und der Saugkalotte 112, vorzugsweise zwischen der Dichtkante 128 und einem Bereich der Oberfläche der Saugkalotte 112, nachströmen. Insbesondere kann die Luft vorzugsweise durch den Spalt 148 in Richtung der in Figur 4A gestrichelt dargestellten Pfeile, beispielsweise in einen luftdicht verschließbaren Hohlraum 126, nachströmen.

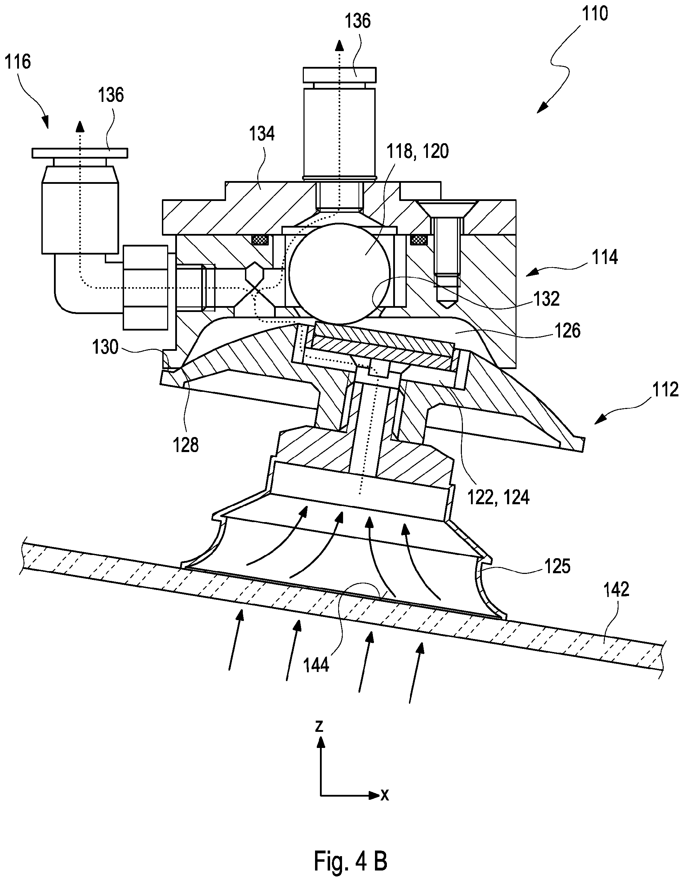

Durch eine Verringerung des Spalts 148, insbesondere aufgrund von weiterem Absaugen der Luft und/oder durch ein Aneinanderfügen des Bereichs der Oberfläche der Saugkalotte 112 und der Dichtkante 128, wird das Nachströmen der Luft durch den Spalt 148, insbesondere durch den Ringspalt, unterbrochen, wie beispielsweise Figur 4B illustriert. Auf diese Weise kann beispielsweise der luftdicht verschließbare Hohlraum 126 luftdicht verschlossen werden. Insbesondere kann zwischen der Oberfläche der Saugkalotte 112 und der Dichtkante 128 Reibung, vorzugsweise eine durch Reibung entstehende Kraft, insbesondere eine Reibungskraft, wirken. Aufgrund der Reibungskraft kann beispielsweise die Saugkalotte 112 gegenüber dem Gegenstück 114 fixiert werden. Insbesondere kann die Reibungskraft einer aufgrund der magnetischen Wechselwirkung zwischen der Kugel 120 und dem magnetischen Element 124 wirkenden Kraft, beispielsweise einer magnetischen Kraft, entgegenwirken. Vorzugsweise kann die Reibungskraft die magnetische Kraft überwinden, insbesondere kann die Reibungskraft größer sein als die magnetische Kraft.

Wie in Figur 4B illustriert, kann der Saugaufsatz 125 weiterhin an den Teil der Oberfläche 144 des Gegenstands 142 angepasst sein. Insbesondere kann der Saugaufsatz 125 eingerichtet sein, um den Teil der Oberfläche 144 des Gegenstands 142 luftdicht abzuschließen. Vorzugsweise kann durch weiteres Absaugen der Luft durch den mindestens einen Anschluss 136, wie beispielsweise mittels der durch die Anschlüsse 136 führenden Pfeile in Figur 4B illustriert, ein Ansaugen des Gegenstands 142 erreicht werden. Beispielsweise kann ein Wirken einer Kraft entlang der in Figur 4B durchgezogenen Pfeile erreicht werden, welche den Gegenstand 142 gegenüber dem Sauggreifsystem 110 fixiert. Insbesondere kann der Gegenstand 142 auf diese Weise zusammen mit dem Sauggreifsystem 110 bewegt, beispielsweise transportiert, werden. Insbesondere kann der Gegenstand 142, beispielsweise das Glas, vorzugsweise das Brillenglas, transportiert, beispielsweise angehoben, werden ohne dabei seine Lage bezüglich des Sauggreifsystems 110 zu verändern. Auf diese Weise kann beispielsweise ein Handhaben, vorzugsweise ein positionsgenaues Handhaben, besonders bevorzugt ein punktgenaues und sanftes Handhaben, des Gegenstands 142 erreicht werden.

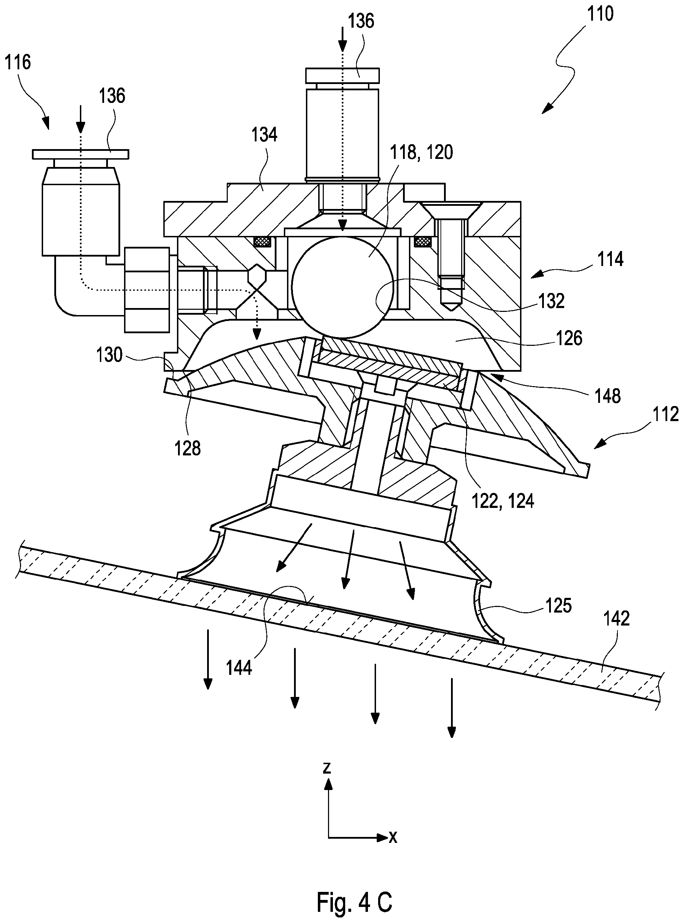

Weiterhin umfasst das in Figur 3 illustrierte Verfahren einen Verfahrensschritt 150, welcher gemäß Schritt d) ein Freigeben des Unterdrucks zur Beendigung der Handhabung des Gegenstands 142 umfasst. Insbesondere kann, um die Handhabung des Gegenstands 142 zu beenden, der Unterdruck freigegeben, insbesondere verringert oder vollständig entfernt, werden, wie beispielsweise in Figur 4C illustriert. Vorzugsweise kann ein Freigeben des Unterdrucks, insbesondere durch ein Verringern oder Entfernen des Unterdrucks und/oder durch ein Beaufschlagen des Drucksystems 116 mit Druck, beispielsweise mit Überdruck, erreicht werden. Das Freigeben des Unterdrucks erfolgt vorzugsweise durch Einströmen eines Fluids, insbesondere Luft, beispielsweise in Richtung der in Figur 4C illustrierten durch die Anschlüsse 136 führenden Pfeile. Insbesondere kann durch die einströmende Luft die Oberfläche des Saugkalotte 112 und die Dichtkante 128 voneinander getrennt werden, wodurch der Spalt 148 wieder entsteht und die Reibung, insbesondere die Reibungskraft, zwischen der Saugkalotte 112 und dem Gegenstück 114 aufgelöst wird. Vorzugsweise wirkt eine durch die einströmende Luft erzeugte Druckkraft und/oder eine Schwerkraft in Richtung der in Figur 4B illustrierten durchgezogenen Pfeile, so dass sich der Gegenstand 142, insbesondere das Glas, vorzugsweise das Brillenglas, von dem Sauggreifsystem 110 lösen kann.

Zudem umfasst das in Figur 3 illustrierte Verfahren einen Verfahrensschritt 152, welcher gemäß Schritt e) ein Zurückführen des Sauggreifsystems 110 in den Ausgangszustand mittels einer magnetischen Wechselwirkung der Kugel 120 und des magnetischen Elements 124 umfasst. Vorzugsweise wird das Sauggreifsystem 110 durch die aufgrund der magnetischen Wechselwirkung zwischen der Kugel 120 und dem magnetischen Element 124 wirkenden Magnetkräfte in den Ausgangszustand zurückgeführt, beispielsweise in den Ausgangszustand des Sauggreifsystems 110 welcher in Figur 1A illustriert ist.

### Bezugszeichenliste

- 110: Sauggreifsystem
- 112: Saugkalotte
- 114: Gegenstück
- 116: Drucksystem
- 118: erstes Element
- 120: Kugel
- 122: zweites Element
- 124: magnetisches Element
- 125: Saugaufsatz
- 126: Hohlraum
- 128: Dichtkante
- 130: Auslenkanschlag
- 132: Kugelaufnahme
- 134: Gehäusedeckel
- 136: Anschluss
- 138: Schritt a): Bereitstellen eines Sauggreifsystems in einem Ausgangszustand
- 140: Schritt b): Positionieren des Sauggreifsystems in Bezug auf den zu handhabenden Gegenstand
- 142: Gegenstand
- 144: Oberfläche
- 146: Schritt c): Erzeugen eines Unterdrucks zur Handhabung des Gegenstands
- 148: Spalt
- 150: Schritt d): Freigeben des Unterdrucks zur Beendigung der Handhabung des Gegenstands
- 152: Schritt e): Zurückführen des Sauggreifsystems in den Ausgangszustand mittels einer magnetischen Wechselwirkung der Kugel und des magnetischen Elements

## Patentansprüche

1. Sauggreifsystem (110) zur Handhabung mindestens eines Gegenstands (142), wobei das Sauggreifsystem (110) eine Saugkalotte (112) zur Handhabung des mindestens einen Gegenstands (142) und ein zur Saugkalotte (112) korrespondierend ausgestaltetes Gegenstück (114) umfasst, wobei ferner ein magnetisches Element (124) vorgesehen ist,
**dadurch gekennzeichnet,**
**dass** weiterhin eine beweglich gelagerte magnetisierbare Kugel (120) vorgesehen ist, wobei die Kugel (120) und das magnetische Element (124) magnetisch wechselwirkbar zueinander angeordnet sind, um eine räumliche Lage der Saugkalotte (112) in Bezug auf das Gegenstück (114) zu beeinflussen.

2. Sauggreifsystem (110) nach dem vorangehenden Anspruch, **dadurch gekennzeichnet, dass** das Gegenstück (114) zur Aufnahme eines ersten Elements (118) eingerichtet ist, wobei das erste Element (118) ausgewählt ist aus der beweglich gelagerten magnetisierbaren Kugel (120) und dem magnetischen Element (124), wobei die Saugkalotte (112) zur Aufnahme eines von dem ersten Element (118) verschiedenen zweiten Elements (122) eingerichtet ist, wobei das zweite Element (124) ausgewählt ist aus der Kugel (120) und dem magnetischen Element (124).

3. Sauggreifsystem (110) nach einem der vorangehenden Ansprüche, **dadurch gekennzeichnet, dass** die Saugkalotte (112) einen Saugaufsatz (125) umfasst, welcher eingerichtet ist, sich an einen Teil einer Oberfläche (144) des Gegenstands (142) anzupassen, wobei der Saugaufsatz (125) weiterhin eingerichtet ist, um den Teil der Oberfläche (144) des Gegenstands (142) luftdicht abzuschließen.

4. Sauggreifsystem (110) nach einem der vorangehenden Ansprüche, **dadurch gekennzeichnet, dass** das Gegenstück (114) und die Saugkalotte (112) eingerichtet sind, um einen luftdicht verschließbaren Hohlraum (126) zwischen dem Gegenstück (114) und der Saugkalotte (112) auszubilden, wobei der luftdicht verschließbare Hohlraum (126) durch ein Aneinanderfügen eines Bereichs der Oberfläche der Saugkalotte (112) und einer Dichtkante (128), über welche das Gegenstück (114) verfügt, ausbildbar ist.

5. Sauggreifsystem (110) nach dem vorangehenden Anspruch, **dadurch gekennzeichnet, dass** die Saugkalotte (112) einen fest mit ihr verbundenen Auslenkanschlag (130) aufweist, mittels welchem eine Relativbewegung der Saugkalotte (112) zu dem Gegenstück (114) einschränkbar ist, wobei die Dichtkante (128) eine Bewegung des Auslenkanschlags (130) begrenzt.

6. Sauggreifsystem (110) nach einem der vorangehenden Ansprüche, **dadurch gekennzeichnet, dass** die Kugel (120) das magnetische Element (124) an mindestens einem Punkt berührt.

7. Sauggreifsystem (110) nach einem der vorangehenden Ansprüche, **dadurch gekennzeichnet, dass** das magnetische Element ausgewählt ist aus einem Permanentmagnet und einem Elektromagnet.

8. Sauggreifsystem (110) nach einem der vorangehenden Ansprüche, **dadurch gekennzeichnet, dass** das magnetische Element (124) als Magnetscheibe oder als eine Kugelkalotte ausgeführt ist,

9. Sauggreifsystem (110) nach dem vorangehenden Anspruch, **dadurch gekennzeichnet, dass** die Kugelkalotte der Kugel (120) einer dem Gegenstück (114) zugewandten Oberfläche der Saugkalotte (112) oder einer der Saugkalotte (112) zugewandten Oberfläche des Gegenstücks (114) angepasst ist.

10. Sauggreifsystem (110) nach einem der vorangehenden Ansprüche, wobei eine Kugelaufnahme (132) zur Aufnahme der Kugel (120) vorgesehen ist, wobei die Kugelaufnahme (132) zur dauernden, beweglichen Lagerung der Kugel (120) eingerichtet ist, wobei die Kugelaufnahme (132) ferner derart ausgestaltet ist, dass eine Rotationsbewegung der Kugel (120) und/oder eine begrenzte translatorische Bewegung der Kugel (120) in mindestens eine Richtung ausführbar ist.

11. Sauggreifsystem (110) nach einem der vorangehenden Ansprüche, **dadurch gekennzeichnet, dass** das Gegenstück (114) als Gehäuse eingerichtet ist, wobei das Gehäuse einen Gehäusedeckel (134) aufweist, wobei der Gehäusedeckel (134) dazu eingerichtet ist, dass die Kugel (120) in das Gegenstück (114) einbringbar ist.

12. Verfahren zur Handhabung mindestens eines Gegenstands (142), umfassend die Schritte:
a) Bereitstellen eines Sauggreifsystems (110), wobei das Sauggreifsystem (110) eine Saugkalotte (112) zur Handhabung des mindestens einen Gegenstands (142) und ein zur Saugkalotte (112) korrespondierend ausgestaltetes Gegenstück (114) umfasst, wobei ferner ein magnetisches Element (124) vorgesehen ist;
b) Positionieren des Sauggreifsystems (110) in Bezug auf den zu handhabenden Gegenstand (142);
c) Erzeugen eines Unterdrucks zur Handhabung des Gegenstands (142);
d) Freigeben des Unterdrucks zur Beendigung der Handhabung des Gegenstands (142); und
e) Zurückführen des Sauggreifsystems (110) in den Ausgangszustand mittels einer magnetischen Wechselwirkung einer Kugel (120) und des magnetischen Elements (124).
**dadurch gekennzeichnet,**
**dass** in dem Sauggreifsystem (110) weiterhin die Kugel (120) eine beweglich gelagerte magnetisierbare Kugel (120) ist, wobei die Kugel (120) und das magnetische Element (124) derart magnetisch wechselwirkbar zueinander angeordnet sind, dass dadurch eine räumliche Lage der Saugkalotte (112) in Bezug auf das Gegenstück (114) zumindest während einem der Schritte b) oder e) beeinflusst wird.

13. Verfahren nach dem vorangehenden Anspruch, wobei durch das Erzeugen des Unterdrucks die Saugkalotte (112) relativ zu dem Gegenstück (114) fixiert wird.

14. Verfahren zur Herstellung mindestens eines Brillenglases, wobei eine Handhabung des Brillenglases zumindest während der Herstellung des Brillenglases mittels eines Verfahrens nach einem der beiden vorangehenden Ansprüche erfolgt.

15. Verwendung eines Sauggreifsystems (110) zur Handhabung mindestens eines Gegenstands (142), wobei der Gegenstand (142) ein optisches Element ist oder umfasst, wobei das Sauggreifsystem (110) eine Saugkalotte (112) zur Handhabung des mindestens einen Gegenstands (142) und ein zur Saugkalotte (112) korrespondierend ausgestaltetes Gegenstück (114) umfasst, wobei ferner ein magnetisches Element (124) vorgesehen ist,
**dadurch gekennzeichnet,**
**dass** weiterhin eine beweglich gelagerte magnetisierbare Kugel (120) vorgesehen ist, wobei die Kugel (120) und das magnetische Element (124) derart magnetisch wechselwirkbar zueinander angeordnet sind, um eine räumliche Lage der Saugkalotte (112) in Bezug auf das Gegenstück (114) zu beeinflussen.

## Claims

1. Suction gripper system (110) for the handling of at least one article (142), wherein the suction gripper system (110) comprises a suction calotte (112) for the handling of the at least one article (142) and comprises a counterpart (114) which is designed correspondingly to the suction calotte (112), wherein a magnetic element (124) is furthermore provided,
**characterized**
**in that** a movably mounted magnetizable ball (120) is furthermore provided, wherein the ball (120) and the magnetic element (124) are arranged in magnetically interactable fashion with respect to one another in order to influence a spatial position of the suction calotte (112) in relation to the counterpart (114).

2. Suction gripper system (110) according to the preceding claim, **characterized in that** the counterpart (114) is configured for receiving a first element (118), wherein the first element (118) is selected from the movably mounted magnetizable ball (120) and the magnetic element (124), wherein the suction calotte (112) is configured for receiving a second element (122) which differs from the first element (118), wherein the second element (124) is selected from the ball (120) and the magnetic element (124).

3. Suction gripper system (110) according to any of the preceding claims, **characterized in that** the suction calotte (112) comprises a suction attachment (125) which is configured to adapt to a part of a surface (144) of the article (142), wherein the suction attachment (125) is furthermore configured to close off the part of the surface (144) of the article (142) in air-tight fashion.

4. Suction gripper system (110) according to any of the preceding claims, **characterized in that** the counterpart (114) and the suction calotte (112) are configured to form a cavity (126), which can be closed off in air-tight fashion, between the counterpart (114) and the suction calotte (112), wherein the cavity (126) which can be closed off in air-tight fashion can be formed by virtue of a region of the surface of the suction calotte (112) and a sealing edge (128) comprised by the counterpart (114) being joined together.

5. Suction gripper system (110) according to the preceding claim, **characterized in that** the suction calotte (112) has a deflection stop (130) which is fixedly connected thereto and by means of which a relative movement of the suction calotte (112) with respect to the counterpart (114) can be restricted, wherein the sealing edge (128) limits a movement of the deflection stop (130).

6. Suction gripper system (110) according to any of the preceding claims, **characterized in that** the ball (120) makes contact with the magnetic element (124) at at least one point.

7. Suction gripper system (110) according to any of the preceding claims, **characterized in that** the magnetic element is selected from a permanent magnet and an electromagnet.

8. Suction gripper system (110) according to any of the preceding claims, **characterized in that** the magnetic element (124) is designed as a magnetic disc or as a spherical calotte.

9. Suction gripper system (110) according to the preceding claim, **characterized in that** the spherical calotte is adapted to the ball (120), to a surface of the suction calotte (112) facing towards the counterpart (114), or to a surface of the counterpart (114) facing towards the suction calotte (112).

10. Suction gripper system (110) according to any of the preceding claims, wherein a ball receptacle (132) is provided for receiving the ball (120), wherein the ball receptacle (132) is configured for the permanent movable mounting of the ball (120), wherein the ball receptacle (132) is furthermore designed such that a rotational movement of the ball (120) and/or a limited translational movement of the ball (120) in at least one direction can be performed.

11. Suction gripper system (110) according to any of the preceding claims, **characterized in that** the counterpart (114) is configured as a housing, wherein the housing has a housing cover (134), wherein the housing cover (134) is configured such that the ball (120) can be introduced into the counterpart (114).

12. Method for handling at least one article (142), comprising the following steps:
a) providing a suction gripper system (110), wherein the suction gripper system (110) comprises a suction calotte (112) for the handling of the at least one article (142) and comprises a counterpart (114) which is designed correspondingly to the suction calotte (112), wherein a magnetic element (124) is furthermore provided,
b) positioning the suction gripper system (110) in relation to the article (142) to be handled;
c) generating a negative pressure for the handling of the article (142);
d) releasing the negative pressure in order to end the handling of the article (142); and
e) returning the suction gripper system (110) into the initial state by means of a magnetic interaction of a ball (120) and of the magnetic element (124),
**characterized**
**in that**, in the suction gripper system (110), the ball (120) is furthermore a movably mounted magnetizable ball (120), wherein the ball (120) and the magnetic element (124) are arranged in magnetically interactable fashion with respect to one another such that, as a result, a spatial position of the suction calotte (112) in relation to the counterpart (114) is influenced at least during one of the steps b) or e).

13. Method according to the preceding claim, wherein, by means of the generation of the negative pressure, the suction calotte (112) is fixed relative to the counterpart (114).

14. Method for producing at least one spectacle lens, wherein handling of the spectacle lens at least during the production of the spectacle lens is performed by means of a method according to either of the two preceding claims.

15. Use of a suction gripper system (110) for the handling of at least one article (142), wherein the article (142) is or comprises an optical element, wherein the suction gripper system (110) comprises a suction calotte (112) for the handling of the at least one article (142) and comprises a counterpart (114) which is designed correspondingly to the suction calotte (112), wherein a magnetic element (124) is furthermore provided, **characterized**
**in that** a movably mounted magnetizable ball (120) is furthermore provided, wherein the ball (120) and the magnetic element (124) are arranged in magnetically interactable fashion with respect to one another in order to influence a spatial position of the suction calotte (112) in relation to the counterpart (114).

## Revendications

1. Système de pince aspirante (110) permettant la manipulation d'au moins un objet (142), le système de pince aspirante (110) comprenant une calotte aspirante (112) permettant la manipulation de l'au moins un objet (142) et une pièce antagoniste (114) configurée de manière à correspondre à la calotte aspirante (112), un élément magnétique (124) étant en outre prévu,
**caractérisé en ce**
**qu'**il est en outre prévu une bille pouvant être magnétisée (120) supportée de manière déplaçable, la bille (120) et l'élément magnétique (124) étant disposés de manière à pouvoir interagir magnétiquement l'un avec l'autre, afin d'influencer une position spatiale de la calotte aspirante (112) par rapport à la pièce antagoniste (114) .

2. Système de pince aspirante (110) selon la revendication précédente, **caractérisé en ce que** la pièce antagoniste (114) est prévue pour recevoir un premier élément (118), le premier élément (118) étant choisi parmi la bille pouvant être magnétisée (120) supportée de manière déplaçable et l'élément magnétique (124), la calotte aspirante (112) étant prévue pour recevoir un deuxième élément (122) différent du premier élément (118), le deuxième élément (124) étant choisi parmi la bille (120) et l'élément magnétique (124).

3. Système de pince aspirante (110) selon l'une quelconque des revendications précédentes, **caractérisé en ce que** la calotte aspirante (112) comprend une ventouse (125) qui est prévue pour s'adapter à une partie d'une surface (144) de l'objet (142), la ventouse (125) étant en outre prévue pour fermer de manière étanche à l'air la partie de la surface (144) de l'objet (142).

4. Système de pince aspirante (110) selon l'une quelconque des revendications précédentes, **caractérisé en ce que** la pièce antagoniste (114) et la calotte aspirante (112) sont prévues pour constituer une cavité (126) pouvant être close de manière étanche à l'air entre la pièce antagoniste (114) et la calotte aspirante (112), la cavité (126) pouvant être close de manière étanche à l'air pouvant être réalisée en accolant l'une contre l'autre une région de la surface de la calotte aspirante (112) et une arête d'étanchéité (128) appartenant à la pièce antagoniste (114).

5. Système de pince aspirante (110) selon la revendication précédente, **caractérisé en ce que** la calotte aspirante (112) présente une butée de déviation (130) connectée fixement à celle-ci, au moyen de laquelle un mouvement relatif de la calotte aspirante (112) par rapport à la pièce antagoniste (114) peut être limité, l'arête d'étanchéité (128) limitant un déplacement de la butée de déviation (130).

6. Système de pince aspirante (110) selon l'une quelconque des revendications précédentes, **caractérisé en ce que** la bille (120) vient en contact au niveau d'au moins un point avec l'élément magnétique (124).

7. Système de pince aspirante (110) selon l'une quelconque des revendications précédentes, **caractérisé en ce que** l'élément magnétique est choisi parmi un aimant permanent et un électroaimant.

8. Système de pince aspirante (110) selon l'une quelconque des revendications précédentes, **caractérisé en ce que** l'élément magnétique (124) est réalisé sous forme de disque magnétique ou sous forme de calotte sphérique.

9. Système de pince aspirante (110) selon la revendication précédente, **caractérisé en ce que** la calotte sphérique de la bille (120) est adaptée à une surface de la calotte aspirante (112) tournée vers la pièce antagoniste (114) ou à une surface de la pièce antagoniste (114) tournée vers la calotte aspirante (112).

10. Système de pince aspirante (110) selon l'une quelconque des revendications précédentes, dans lequel un logement de bille (132) pour recevoir la bille (120) est prévu, le logement de bille (132) étant prévu pour supporter la bille (120) de manière durable et déplaçable, le logement de bille (132) étant en outre configuré de manière à permettre un mouvement de rotation de la bille (120) et/ou un mouvement de translation limité de la bille (120) dans au moins une direction.

11. Système de pince aspirante (110) selon l'une quelconque des revendications précédentes, **caractérisé en ce que** la pièce antagoniste (114) est réalisée sous forme de boîtier, le boîtier présentant un couvercle de boîtier (134), le couvercle de boîtier (134) étant prévu de telle sorte que la bille (120) puisse être introduite dans la pièce antagoniste (114).

12. Procédé pour permettre la manipulation d'au moins un objet (142), comprenant les étapes suivantes :
a) fourniture d'un système de pince aspirante (110), le système de pince aspirante (110) comprenant une calotte aspirante (112) permettant la manipulation de l'au moins un objet (142) et une pièce antagoniste (114) configurée de manière à correspondre à la calotte aspirante (112), un élément magnétique (124) étant en outre prévu ;
b) positionnement du système de pince aspirante (110) par rapport à l'objet devant être manipulé (142) ;
c) génération d'une dépression pour permettre la manipulation de l'objet (142) ;
d) suppression de la dépression afin de terminer la manipulation de l'objet (142) ; et
e) repositionnement du système de pince aspirante (110) dans l'état initial au moyen d'une interaction magnétique entre une bille (120) et l'élément magnétique (124),
**caractérisé en ce que**
dans le système de pince aspirante (110), la bille (120) est de plus une bille pouvant être magnétisée (120) supportée de manière déplaçable, la bille (120) et l'élément magnétique (124) étant disposés de manière à pouvoir interagir magnétiquement l'un avec l'autre de telle sorte qu'une position spatiale de la calotte aspirante (112) par rapport à la pièce antagoniste (114) soit de ce fait influencée au moins pendant l'une des étapes b) ou e).

13. Procédé selon la revendication précédente, dans lequel, du fait de la génération de la dépression, la calotte aspirante (112) est fixée par rapport à la pièce antagoniste (114).

14. Procédé de fabrication d'au moins un verre de lunettes, une manipulation du verre de lunettes s'effectuant au moins pendant la fabrication du verre de lunettes au moyen d'un procédé selon l'une quelconque des deux revendications précédentes.

15. Utilisation d'un système de pince aspirante (110) permettant la manipulation d'au moins un objet (142), l'objet (142) étant ou comprenant un élément optique, le système de pince aspirante (110) comprenant une calotte aspirante (112) permettant la manipulation de l'au moins un objet (142) et une pièce antagoniste (114) configurée de manière à correspondre à la calotte aspirante (112), un élément magnétique (124) étant en outre prévu,
**caractérisée en ce**
**qu'**une bille pouvant être magnétisée (120) supportée de manière déplaçable est en outre prévue, la bille (120) et l'élément magnétique (124) étant disposés de manière à pouvoir interagir magnétiquement l'un avec l'autre afin d'influencer une position spatiale de la calotte aspirante (112) par rapport à la pièce antagoniste (114) .
